# EUROPÄISCHE PATENTSCHRIFT

(11) **EP 0 631 448 B1**
(45) Veröffentlichungstag und Bekanntmachung des Hinweises auf die Patenterteilung: **07.11.2001**
(21) Anmeldenummer: 94108628.2
(22) Anmeldetag: 06.06.1994
(51) Int. Cl.: G06F 11/00, H04M 3/24, H04Q 3/545, H04Q 11/04

(54) **Verfahren zur Unterstützung von Testroutinen**
Method for supporting test routines
Méthode pour supporter des routines de test

(30) Priorität: 24.06.1993 DE 4321054
(43) Veröffentlichungstag der Anmeldung: 28.12.1994
(73) Patentinhaber: SIEMENS AKTIENGESELLSCHAFT, 80333 München (DE)
(72) Erfinder: Debacker, Andre, Ing., B-9880 Aalter (BE)

(56) Entgegenhaltungen:
- EP-A- 0 537 040
- US-A- 5 045 994
- GRONLUND R D ET AL: "THE HP 64700 EMBEDDED DEBUG ENVIRONMENT: A NEW PARADIGM FOR EMBEDDED SYSTEM INTEGRATION AND DEBUGGING" HEWLETT-PACKARD JOURNAL, Bd. 44, Nr. 2, Seiten 90-106, XP000360990
- SHIMOMURA T ET AL: "VIPS: A VISUAL DEBUGGER FOR LIST STRUCTURES" PROCEEDINGS OF THE FOURTEENTH ANNUAL INTERNATIONAL COMPUTER SOFTWARE & APPLICATIONS CONFERENCE (COMPSAC '90), 31.Oktober 1990 - 2.November 1990, CHICAGO, Seiten 530-537, XP000223650
- MORRIS R ET AL: "LINKING SOFTWARE AND HARDWARE DESIGN" HIGH PERFORMANCE SYSTEMS, Bd. 11, Nr. 6, Juni 1990, Seiten 29, 31, 34-36, 40, XP000128596

## Beschreibung

Die Erfindung betrifft ein Verfahren zur Unterstützung von Testroutinen.

Nachdem eine neue Anlagensoftware oder neue Programmodule einer Anlagensoftware, wie z.B. eine verbesserte Version einer Anlagensoftware, eine Betriebssoftware oder zusätzliche Leistungsmerkmale bewirkende Softwaremodule, in eine Kommunikationsanlage integriert wurde(n), wird die Anlagensoftware durch Prüfroutinen in ihrer Gesamtheit getestet. Dabei wird festgestellt, ob alle die Kommunikationsanlage kennzeichnenden Leistungs- und Funktionsmerkmale einem Benutzer weiter zur Verfügung stehen. Die Testumgebung der Kommunikationsanlage wird softwaremäßig nachgebildet um eine möglichst große Flexibilität zu gewährleisten. In dieser Testumgebung werden durch Anreize, beispielsweise ausgelöst durch softwaremäßig nachgebildete Teilnehmerendgeräte, einfache Routineprüfungen oder zeitkritische Vermittlungsprozeduren in der Kommunikationsanlage angestoßen. Dabei ist es für einen Entwickler, der den Prüfvorgang, zum Beispiel am Bildschirm überwacht sehr schwer, aufgrund der Komplexität der Prüfprozeduren ausführenden Programmodule den Stand der jeweiligen Prüfphase sofort zu erkennen. Bei unvorhergesehenen Fehlern in der Anlagensoftware stehen dem Entwickler Testprogrammhilfen, wie beispielsweise ein Debug Programmodul zur Fehlereingrenzung, zur Verfügung. Programmfehler können dabei erst durch mehrmaliges Starten einer Testprozedur und durch Setzen von Haltepunkten (Breakpoints) lokalisiert werden. Erschwerend für eine Fehlersuche in den Programmodulen der Anlagensoftware der Kommunikationsanlage ist es, daß zur Lokalisierung von kritischen Programmstellen ein Testprogramm wiederholt gestartet werden muß. So erzeugt zum Beispiel ein einfacher Gesprächsaufbau zwischen zwei an die Kommunikationsanlage angeschlossenen Teilnehmern eine Vielzahl von Meldeprozeduren die in einer maschinenorientierten Sprache, wie z.B. in ASCII-Zeichen, zwischen einem Datenprozessor und einem Input/Output Prozessor ausgetauscht werden. Jede Meldeprozedur zwischen den Prozessoren verursacht eine Vielzahl von Programmschritten die, auf einem Bildschirm oder einem Bildschirmsegment angezeigt, nachvollzogen werden können. Eine Fehlersuche aufgrund der Debugdaten gestaltet sich als sehr umständlich, da dafür auf einem Bildschirm nur eine begrenzte Zeilenzahl zur Verfügung steht. Neben dem Debug-Programmodul kann zur Fehlersuche ein Trace-Programmodul benützt werden, bei dem die einzelnen Befehle eines Testprogramms schrittweise nacheinander ausgeführt werden und der Benutzer Programmzeile für Programmzeile nachvollziehen kann. Ein "Blättern" in den Tracedaten gestaltet sich bei den komplexen Programmzusammenhängen als sehr zeitaufwendig. Aus US 5,045,994 ist ein Hilfsmittel bekannt, um Software von Computersystemen methodisch zu kreieren und zu testen bekannt.

Aus der Patentschrift 5 045 994 ist ein Hilfsmittel bekannt, um Software für ein Computersystem methodisch zu entwerfen und zu testen.

Die der Erfindung zugrundeliegende Aufgabe besteht darin, ein gegenüber dem Stand der Technik verbessertes Verfahren zur Unterstützung von Testprozeduren anzugeben.

Die Aufgabe wird durch die Merkmale des Patentanspruchs 1 gelöst.

Die Erfindung bringt den Vorteil mit sich, daß aktuelle teilnehmeranschlußbezogene Daten einer gerade geprüften Verbindung, wie beispielsweise eine akustische sowie visuelle Signalisierung bei den beteiligten Teilnehmeranschlüssen angezeigt wird und der Entwickler den Prüfverlauf und das Prüfergebnis am Bildschirm nachvollziehen kann. Ein eingeleiteter sowie ausgeführter Verbindungsaufbau zwischen den Teilnehmerendgeräten in einer Kommunikationsanlage kann mit einer tatsächlich ausgeführten Verbindung oder Signalisierung sofort verglichen werden. Fehlverbindungen oder fehlerhafte Signalisierungen können sofort erkannt und in den entsprechenden Programmodulen der Anlagensoftware berichtigt werden. Darüber hinaus kann, wie beispielsweise bei einem internen Gesprächsaufbau, durch einfaches Vergleichen von Fensterinhalten (Bildschirmsegmenten) ein jeweiliger "Ist-Zustand" bei den Teilnehmerendeinrichtungen nachvollzogen werden.

Eine weitere Ausgestaltung der Erfindung ist, daß akustische und soweit ausgeführt eine visuelle Signalisierung, wie zum Beispiel die aufeinander abgestimmten Displayanzeigen des rufenden und gerufenen Teilnehmers jeweils in einem entsprechenden, einem Teilnehmeranschluß zugeordneten Fenster oder Bildschirmsegment abgebildet werden. Dies bringt den Vorteil mit sich, daß das Zusammenwirken von Informationen die jeweils einem Teilnehmer zugewiesen werden auf einfache Weise nachkontrolliert werden können.

Eine weitere Ausgestaltung der Erfindung ist, daß auf dem Bildschirm weitere, wie z.B. ein Test- und Eingabefenster für Debugkommandos, ein Eingabefenster für Simulationsprozeduren auslösende Eingabekommandos, ein Fenster mit aktuellen Testprogrammausschnitten sowie ein Fenster mit Konfigurationsdaten der Kommunikationsanlage dargestellt werden. Dies bringt den Vorteil mit sich, daß mittels dieser Darstellung auf dem Bildschirm sowohl auslösende Anreize, vermittlungstechnische Programmsegmente sowie akustische und visuelle Information oder Zustandsinformation in/an den Telekommunikationsendgeräten wiederholte Prüfprozedurabläufe vermieden werden und Anlagensoftwarefehler sofort erkannt werden und berichtigt werden können.

Eine weitere Ausgestaltung der Erfindung ist, daß die Anzeigeinformation entsprechend ihrer Dringlichkeit prioritätsabhängig in den teilnehmeranschlußbezogenen Bildschirmsegmenten abgebildet werden. Dies bringt neben dem Vorteil, daß auch Texte mit niedrigerer Priorität, wie zum Beispiel wartende Texte, betrachtet und nachkontrolliert werden können, den weiteren Vorteil mit sich, daß unselektiert alle Texte die an die Teilnehmerendgeräte abgesendet wurden angezeigt werden.

Eine weitere Ausgestaltung der Erfindung ist, daß die in den Fenstern abgebildete Information zeitabhängig gesteuert ist. Dies bringt den Vorteil mit sich, daß diese nach einem Zeitintervall aus dem Datenspeicher und vom Bildschirm ausgeblendet werden und weitere Prüfprozeduren gestartet sowie Platz für neue Anzeigeinformation in den Fenstern geschaffen werden.

Vorteilhafte Weiterbildungen der Erfindung sind in den Unteransprüchen angegeben.

Weitere Besonderheiten der Erfindung werden aus der nachfolgenden Erläuterung eines Ausführungsbeispiels anhand der Zeichnungsfiguren ersichtlich.

Es zeigen:
- FIG 1: eine schematische Darstellung einer Systemkonfiguration,
- FIG 2: Tabellen und
- FIG 3: eine Datenfensterregenierung.

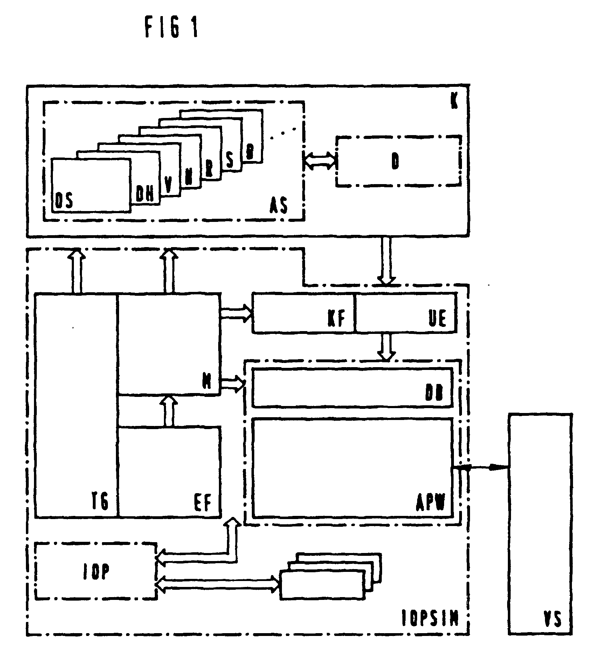

Fig 1 zeigt eine schematische Darstellung einer Testumgebung zum Testen einer Anlagensoftware AS einer Kommunikationsanlage K. Die in die Kommunikationsanlage K zu implementierende Anlagensoftware AS kann entweder über, an eine Kommunikationsanlage K, angeschlossene Teilnehmerendgeräte oder softwaremäßig nachgebildete Teilnehmerendgeräte getestet werden. In der nachfolgenden Beschreibung werden zum Test der Anlagensoftware AS die Endgeräteeinheiten einer Kommunikationsanlage K softwaremäßig durch einen Input/Output Simulator IOPSIM nachgebildet. Die Testprozeduren können dann so ausgestaltet werden, daß bewußt zeitkritische Vermittlungsprozeduren in der Kommunikationsanlage K durchführbar sind. Die gesamte Anlagensoftware wird durch eine Datenverarbeitungsanlage mittels Testprozeduren, die die Fehlersuche in der Anlagensoftware unterstützt, getestet. Ein Fehlersuchprogramm (Debugger) erlaubt das Setzen von Haltepunkten abhängig von bestimmten Bedingungen, wie Variabelwerte oder Speicheradressen sowie das Kontrollieren von Inhalten von Datenspeichern oder beispielsweise das Überspringen oder Hinzufügen von Programmteilen. Die von einem Datenprozessor zur Durchführung eines Vermittlungsbetriebs verwendete Software wird aus einer Mehrzahl von Programmodulen zusammengestellt. Nachfolgend ist die Komplexität der Anlagensoftware AS der Kommunikationsanlage angedeutet, wobei die wesentlichen Programmodule OS, DH, V, N, B, R und S in Hochkommas gesetzt sind:
- Ein "Operating System OS" sorgt z.B. für einen richtigen Meldungsverkehr nach Taskprioritäten oder einer Zeitgliedverwaltung.
- Ein "Device Handler DH" bestehend aus mehreren Device Handler-Typen und sorgt für eine Anpassung der Meldungen, egal von oder zu welchen Endgeräten die Meldung kommt oder geht, als Beispiele seien hier normale oder digitale Telefone, normale Quer- oder Durchwahlverbindungen angeführt.
- Ein "Vermittlungsprogramm V" interpretiert Meldungen/Anreize und entscheidet über die Signalisierung und das Zusammenschalten von Teilnehmeranschlüssen.
- Ein "Network N" Softwaremodul realisiert z.B. das Zusammenschalten von Teilnehmeranschlüssen.
- Mittels eines "Betriebstechnik B" Softwaremoduls kann z.B. durch Zuweisen von Berechtigungen oder das Gruppieren von Teilnehmern eine Anlage eingereicht werden.
- Ein für ein "Recovery R" zuständiges Softwaremodul, daß beim Auftreten von Fehlern in einer Anlagensoftware AS neu startet, ohne bestehende Gesprächsverbindungen in der Kommunikationsanlage K zu unterbrechen.
- Ein Softwaremodul, das für die "Sicherheitstechnik S" innerhalb der Kommunikationsanlage verantwortlich ist, prüft regelmäßig Hardware/Software-Teile der Kommunikationsanlage auf ihre Verfügbarkeit und Zuverlässigkeit.

Um eine Testumgebung einer Kommunikationsanlage möglichst flexibel und transparent zu gestalten werden, wie hier in Figur 1 angedeutet, die Meldungen M zu und von den externen an eine Kommunikationsanlage K anschließbaren Teilnehmerendgeräte durch einen Input/Output Simulator IOPSIM nachgebildet. Die durch Benutzerhandlungen, wie beispielsweise Abheben, Wählen oder das Drücken von Funktionstasten an den Kommunikationsendgeräten der Kommunikationsanlage K, werden Meldungen vom Input-Output Prozessor IOP zum Datenprozessor D weitergeleitet. In umgekehrter Richtung werden Reaktionen, wie beispielsweise Signalisierungstöne, Display Info, LED Info, vom Datenprozessor D zum Input/Output Prozessor IOP in Form von Meldungen zurückgeschickt. Die IOPSIM-Kommandos können in Datenbanken DB abgespeichert und beliebig oft abgerufen und ausgewertet werden.
Der Input/Output Simulator IOPSIM führt im wesentlichen die anschließend aufgeführten Datenmangementprozeduren durch:
- Bereitstellung eines Systemtakts TG für den Datenprozessor D der Kommunikationsanlage K. Der Systemtakt TG ist unter anderem dazu notwendig um das "Operating System OS" des Datenprozessors D der Kommunikationsanlage K zu steuern.
- Die Weiterleitung von Eingabedaten die durch einen Tester über ein Eingabefenster für Simulationskommandos am Bildschirmsegment EF eingegeben werden.
- Der Aufbau eines Konfigurationsfensters KF aus dem der Entwickler ersehen kann auf welchen Einbauplätzen Baugruppen gesteckt sind oder wo und welche Endgeräte angeschlossen sind. Aus dem Konfigurationsfenster KF ist darüber hinaus auch ersichtlich, welche Teilnehmerendgeräte mit welchen Display's, wie z.B. 2x24 oder 8x40 Zeichen verwendet werden.
- Die Abarbeitung von Meldungen M die vom und zum IOP gesandt werden.

Synchron mit dem Wegschicken von Meldungen bzw. Eintreffen der Meldungen M vom "Eingabefenster" EF werden weitgehendst alle wichtigen Hexwerte in einen Klartext übersetzt und im Fenster eingeblendet. Die Meldungen, die vom IOPSIM kommend zum Datenprozessor D und die Meldungen die vom Datenprozessor D über eine Übersetzereinheit UE zum IOP übertragen werden, werden jeweils auf Daten hin überprüft die mit einer Signalisierung zum oder vom Teilnehmerendgerät zu tun haben. Die selektierten Daten, wie beispielsweise eine aktuelle Signalisierung zu und von den Teilnehmerendgeräten, werden teilnehmeranschlußbezogen im Speicher DB zwischengespeichert.
Diese teilnehmerbezogenen Daten können dann über gezielte manuelle Eingabekommandos oder über Subroutinen während der Testprozeduren ausführenden Programmodule in entsprechend initialisierten teilnehmerbezogenen Fenstern APW visualisiert werden. Die wesentlichen, innerhalb eines Fensters dargestellten Daten sind:
- Anschluß (port/card) und Rufnummer AC
- Hörer aufgelegt oder abgehoben SETUP
- angeschaltete Rufe mit Rhythmus RING
- angeschaltete Töne mit Rhythmus TONE
- angeschaltete LED's ggf. mit einem Blinkrhythmus LLED/RLED
- Sichtbare Texte am Display VIS
- Bereitstellung von Textstellen, die im Speicher DB abgelegt sind um prioritäts und/oder zeitabhängig dargestellt zu werden RDY

Eine spezielle mit der Prüfsoftware abgestimmte Vergleichssoftware VS vergleicht IST-Zustände mit abgespeicherten Soll-Zuständen.

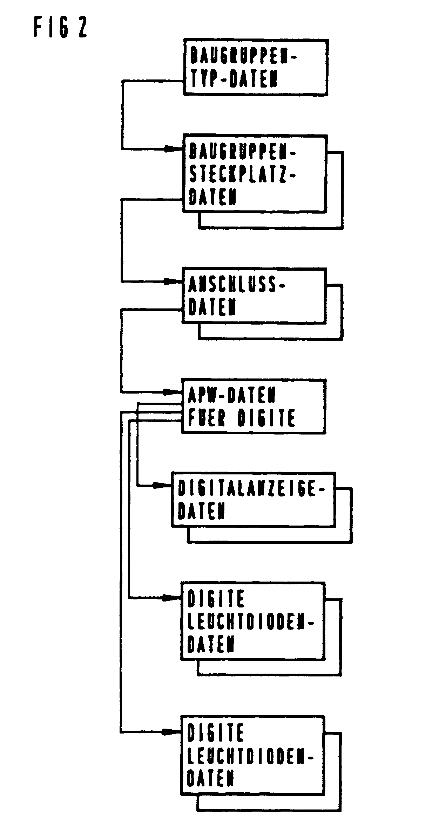

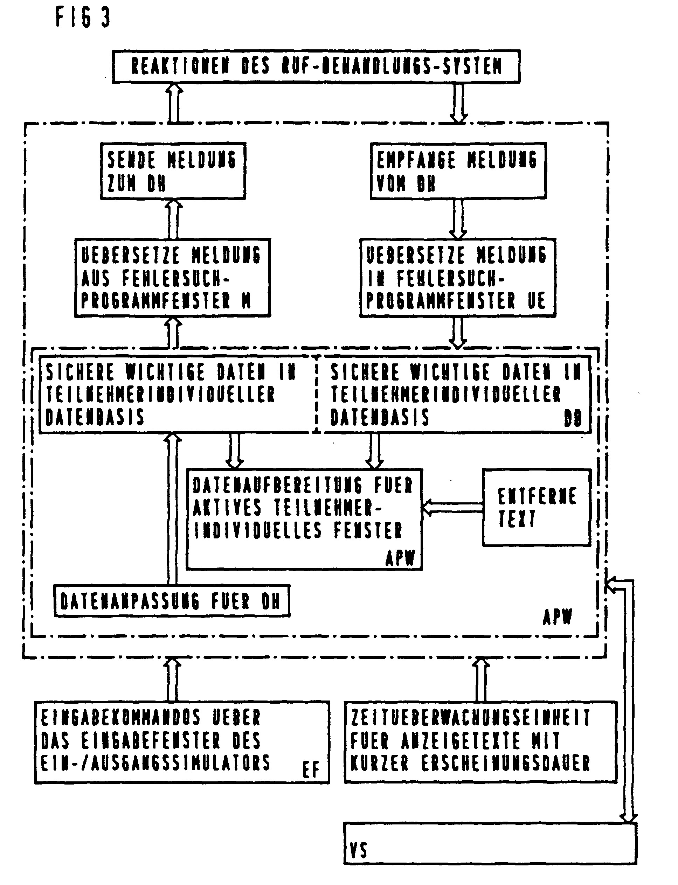

Fig 2 zeigt eine Vielzahl von Tabellen, die, jeweils über Adressen angesteuert, teilnehmerbezogen Informationen über die Kommunikationsendgeräte enthalten. Durch diese Tabellen werden Daten, entsprechend eines Verbindungsaufbaus, wie z.B. ein externes, internes Gespräch oder die Anforderung eines Vermittlungsplatzes, aktiviert und in den entsprechenden teilnehmerbezogenen Fenstern APW angezeigt. Die Auswahl der Tabellen erfolgt entweder direkt durch den Benutzer oder innerhalb einer Subroutine im Prüfprogrammmodul. Zur Bereitstellung der jeweiligen Anzeigeinformation wird eigens eine teilnehmeranschlußabhängige Input/Output Datenbasis DB angelegt (siehe Fig 1 oder Fig 3). Jedesmal wenn eine Karte angesteuert wird, wird der Kartentyp und weitere in einer Vielzahl von in Tabellen, wie z.B. in der Tabelle für Card-typeinfo (Baugruppen-Typ-Daten), Card-slot-info (Baugruppen-Steckplatz-Daten), IDTPORT (Anschlußdaten), IDTWINDI (APW-Daten für Digite), IDTDISP (Digiteanzeige-Daten), IDTLED (Digite Leuchtdiode-Daten), vermerkte Informationen ermittelt und teilnehmerspezifisch im Speicher DB abgespeichert. Die in der Card-type info abgelegten Daten sind Baugruppen-Typ-Namen, Baugruppen-Typ-Wert, Anschlußport pro Baugruppe, Baugruppengruppierungsbit, Standardtyp des APW-Fensters sowie ein Zeiger auf ein Informationsfeld zur gesteckten Baugruppe. Die Karte mit den Steckplatzdaten beinhaltet einen Zeiger auf die nächste Tabelle, Baugruppensteckplatznummer sowie Zeiger auf die Anschluß-Daten. Die Tabelle mit den Anschlußdaten (IDTPORT) weist folgende Daten auf: Zeiger auf die nächste Tabelle, baugruppeninterne Anschlußnummer, Baugruppensteckplatznummer, Anschlußnummer, Gerätetypwert, Typ des APW-Fensters, Zustand des APW-Fensters, Fensterpositionsnummer, Datenstromidentifizierung des APW-Fensters und Zeiger auf die gespeicherten APW-Fensterdaten. Die in der Tabelle IDTWINDI gespeicherten Daten sind Hörer Zustand, Rufinformation, Toninformation, Verbindungszustand, Zeiger auf Anzeigedaten, Zeiger auf die linken LED-Daten sowie auf die rechten LED-Daten. Die Digitalanzeigedaten der Tabelle IDTDISP enthalten Daten der ASCII-Zeichenkette pro Priorität und Feld, Zustand pro Priorität, Zeitzähler pro Priorität, Anzeigekommando und Zeitglied pro Priorität. Die Tabelle für die Digite-Leuchtdiodendaten (IDTLED) enthält folgende Daten: Zeiger auf das nächste Tabelle, Rhythmus, Tastenfunktionsnummer, Referenznummer sowie physikalische Tastennummer. Nach Beendigung einer Verbindung werden die gespeicherten Daten bezüglich der Verbindung wieder gelöscht. Die Ermittlung einer teilnehmerspezifischen Information wird nachfolgend anhand der Fig 3 näher beschrieben.

In FIG 3 ist schematisch eine Generierung von Zustandsdaten eines Teilnehmeranschlusses in einer Mehrzahl von Schritten angedeutet.
- Anforderung zum Anzeigen von einem oder mehreren anschlußbezogenen aktiven Fenstern.
   Der Benutzer aktiviert beispielsweise durch Eingabe eines Kommandos "APW Teilnehmeranschlußnummer ein/aus" im Fenster EF die entsprechenden Teilnehmeranschlüsse die diesbezüglich abgespeicherten Daten anzuzeigen. Die Anforderung wird pro Teilnehmeranschluß beibehalten.
- Aufbau der Datenbasis:
   Alle Meldungen vom/zum Input/Output Simulationsprozessor IOPSIM werden dem zuvor aktivierten Fenster APW angeboten. Die Meldungen M werden dabei auf deren Inhalt hin untersucht, wobei die relevanten Informationen durch Subroutinen in für das aktive Fenster APW nötige Datenstrukturen (siehe Fig. 1 oder Fig. 2) umgewandelt werden. Diese Daten werden in teilnehmerindividuellen Speicherbereichen DB abgespeichert. Das Anlegen eines teilnehmerindividuellen Speicherbereiches DB wird für die Gesamtzahl der an den Prüfprozeduren beteiligten Teilnehmeranschlüsse durchgeführt. In diesem teilnehmerindividuell angelegten Speicherbereich DB sind beispielsweise folgende Daten
   für einen normalen Fernsprecher (NOFE):
   - Hörer Zustand
   - Ruf Zustand
   - Ton
   - Erdtaste
   - Signallampe Zustand,
   für einen Amtsatz:
   - Anruf
   - Ton
   - Erden der Leitung
   - Umpolung der Leitung
   - LED (auf der Baugruppe),
   für ISDN Geräte:
   - Anruf Referenz Nummer
   - Dienst Indentifizierung
   - Meldungstyp,
   für digitale Schnittstellen zum Data Verkehr (DCI):
- Anruf (setup/connect)
   - Ruf
   - Text
   und für einen digitalen Fernsprecher (DIGITE):
   - Anruf (setup/connect)
   - Ruf
   - Ton
   - LED info
      - Taste Identifizierung
      - Taste Nummer
      - Rhythmus
   - Display info
      - Text per Priorität und per Feld
         z.B. Zwei DIGITE Typen sind unterstützt:
         DIGITE mit Display für eine 2X24 Charakter-Zeichenfolge 12 Prioritäten und 4 Felder
         DIGITE mit Display für eine 8X40 Charakter-Zeichenfolge 2 Prioritäten und 22 Felder
      - Zustand pro Priorität
         Wichtigste Zustände:
         Gelöscht (deleted),Bereitgestellt (ready)
         Sichtbar (visual)
   - Zeit info per Priorität -Kommando Zeit-Manche Texte werden durch das Zeitkommando nur kurz abgespeichert.

Diese abgespecheicherte teilnehmerindividuell abgelegten Daten können während einer Prüfprozedur in den Fenstern APW eingeblendet werden.

Nach jeder Meldung, bei der Daten in einer teilnehmerindividuellen Datenbasis DB abgelegt wurden, wird untersucht ob der Teilnehmeranschluß (Port) für eine Anzeige markiert ist. Wenn dies nicht der Fall ist, wird eine Anzeige bezüglich eines Ports abgebrochen. Ist dieser Port markiert so wird programmgesteuert untersucht ob der betreffende Teilnehmeranschluß bereits ein Fenster APW zugewiesen bekommen hat. Wenn dies nicht der Fall ist, wird ein Fenster APW für diesen Teilnehmeranschluß aufgemacht. Ein Programmodul sorgt dafür, daß die Fenster APW nebeneinander und vorzugsweise im unteren Bildschirmbereich positioniert und eingeblendet werden. Eine andersartige benutzerindividuelle Positionierung der Fenster APW auf dem Bildschirm ist ebenso möglich.

Die gespeicherten teilnehmeranschlußbezogenen Daten werden Zeile für Zeile formatiert und in dem Fenster APW eingeblendet. Die Displayinformation wird abhängig von deren Feldnummer einer Zeile zugewiesen. Zusätzliche Informationen über das betreffende Teilnehmerendgerät wird aus den Tabellen entnommen (siehe Fig. 2). Die abgespeicherte Information enthält dabei zum Beispiel die Anzahl der Anzeigefelder, die Breite des Anzeigenfeldes oder eine an den linken oder rechten Rand des Feldes ausgerichtete Schreibweise der Anzeigeinformation. Bevor die Daten in das Fenster APW geschrieben werden, wird noch geprüft ob die anzuzeigenden Daten in das konfigurierte Fenster APW schreibbar sind oder ob noch zusätzlich die Koordinaten für das Fenster APW anzupassen sind.

Zeitabhängig anzuzeigende Texte werden innerhalb des ihnen zugewiesenen Zeitfaktors angezeigt. Die dazu nötige Progammanweisung ist teilnehmerindividuell in der Datenbasis DB abgespeichert. Betreffend der Zeitabhängigkeit der in der Datenbasis DB hinterlegten teilnehmerindividuellen Informationen wird eine eigene Task angestoßen, die zeitabhängige Texte nach einer vorbestimmbaren Zeit wieder aus der Datenbasis DB entfernt. Ein im Fenster abgebildeter Text wird dann aus dem Fenster ausgeblendet und ein frei werdender Platz kann neu beschrieben werden.

## Patentansprüche

1. Verfahren zur Unterstützung von Testprozeduren in einer Kommunikationsanlage (K), wobei Konfigurationsdaten der Kommunikationsanlage oder Testroutinen auslösende Eingabedaten sowie Testprogrammroutinedaten jeweils in einem Segment eines Bildschirms sichtbar gesteuert angezeigt werden,
**dadurch gekennzeichnet,**
**daß** auf dem Bildschirm wenigstens ein weiteres Bildschirmsegment (APW) erzeugt wird, in dem nach Maßgabe von Programmprozeduren aktuelle teilnehmeranschlußbezogene Daten der dem Testbetrieb zugeordneten Anschlußkomponenten der Kommunikationsanlage sowie aktuelle Betriebszustände oder Signalisierungen der Kommunikationsanlage sichtbar gesteuert angezeigt werden.

2. Verfahren nach Anspruch 1,
**dadurch gekennzeichnet,**
**daß** die Anzeige der aktuellen teilnehmeranschlußbezogenen Daten prioritätsbezogen gesteuert angezeigt werden.

3. Verfahren nach Anspruch 1,
**dadurch gekennzeichnet,**
**daß** in dem Bildschirmsegment (APW) teilnehmerindividuelle Anzeigentexte wiedergegeben werden.

4. Verfahren nach Anspruch 1,
**dadurch gekennzeichnet,**
**daß** eine Rufsignalisierung und Tonsignaliserung teilnehmerindividuell innerhalb des Bildschirmsegmentes (APW) angezeigt wird.

5. Verfahren nach Anspruch 1,
**dadurch gekennzeichnet,**
**daß** die Teilnehmerzustände "belegt", "verbunden" sowie "freigegeben" innerhalb des Bildschirmsegmentes (APW) angezeigt werden.

6. Verfahren nach Anspruch 1,
**dadurch gekennzeichnet,**
**daß** eine automatische Anpassung des Bildschirmsegments (APW) an die anzuzeigenden Daten erfolgt.

7. Verfahren nach Anspruch 1,
**dadurch gekennzeichnet,**
**daß** die Anzeigeninformation innerhalb eines Zeitrasters überprüft wird.

8. Verfahren nach Anspruch 1,
**dadurch gekennzeichnet,**
**daß** die Anzahl der Bildschirmsegmente (APW) je nach Umfang des Verbindungsaufbau erfolgt oder vorbestimmt werden kann.

9. Verfahren nach Anspruch 1,
**dadurch gekennzeichnet,**
**daß** die in Bildschirmsegmenten (APW) angezeigten Daten durch ein weiters Programmodul (VS) ausgewertet wird.

## Claims

1. Method for supporting test procedures in a communication installation (K), where configuration data for the communication installation or input data which trigger test routines and also test program routine data are respectively displayed under visible control in a segment of a screen,
**characterized**
**in that** at least one further screen segment (APW) is produced on the screen, which screen segment displays, under visible control, current subscriber-line-related data for the communication installation's line components associated with the test mode and also current operating states or signalling operations in the communication installation as stipulated by program procedures.

2. Method according to Claim 1,
**characterized**
**in that** the current subscriber-line-related data are displayed under priority-related control.

3. Method according to Claim 1,
**characterized**
**in that** subscriber-specific display texts are reproduced in the screen segment (APW).

4. Method according to Claim 1,
**characterized**
**in that** ringing signalling and tone signalling are displayed within the screen segment (APW) on a subscriber-specific basis.

5. Method according to Claim 1,
**characterized**
**in that** the subscriber states "busy", "connected" and "cleared" are displayed within the screen segment (APW).

6. Method according to Claim 1,
**characterized**
**in that** the screen segment (APW) is automatically matched to the data which are to be displayed.

7. Method according to Claim 1,
**characterized**
**in that** the display information is checked within a time frame.

8. Method according to Claim 1,
**characterized**
**in that** the number of screen segments (APW) is based on or can be predetermined in accordance with the scope of connection set-up.

9. Method according to Claim 1,
**characterized**
**in that** the data displayed in screen segments (APW) are evaluated by a further program module (VS).

## Revendications

1. Procédé pour supporter des procédures de test dans une installation de communication (K), dans lequel des données de configuration de l'installation de communication ou des données d'entrée déclenchant des routines de test ainsi que des données de routine de programme de test peuvent être affichées selon une commande et de manière visible respectivement dans une partie d'un écran,
**caractérisé par le fait qu'**on produit sur l'écran au moins une autre partie d'écran (APW) dans laquelle on peut afficher selon une commande et de manière visible, en fonction de procédures programmées, des données actuelles se rapportant aux raccordements d'abonnés et concernant les éléments de raccordement, associés au fonctionnement de test, de l'installation de communication ainsi que des états de fonctionnement actuels ou des signalisations de l'installation de communication.

2. Procédé selon la revendication 1,
**caractérisé par le fait qu'**on affiche selon une commande et en fonction de priorités les données actuelles se rapportant aux raccordements d'abonnés.

3. Procédé selon la revendication 1,
**caractérisé par le fait qu'**on reproduit dans la partie d'écran (APW) des textes d'affichage propres à chaque abonné.

4. Procédé selon la revendication 1,
**caractérisé par le fait qu'**on affiche une signalisation d'appel et une signalisation de tonalité de manière propre à chaque abonné à l'intérieur de la partie d'écran (APW).

5. Procédé selon la revendication 1,
**caractérisé par le fait qu'**on affiche les états d'abonné "occupé", "relié" ainsi que "libéré" à l'intérieur de la partie d'écran (APW).

6. Procédé selon la revendication 1,
**caractérisé par le fait qu'**il s'effectue une adaptation automatique de la partie d'écran (APW) aux données à afficher.

7. Procédé selon la revendication 1,
**caractérisé par le fait qu'**on teste l'information d'affichage à l'intérieur d'un créneau temporel.

8. Procédé selon la revendication 1,
**caractérisé par le fait que** le nombre des parties d'écran (APW) peut varier selon l'étendue de l'établissement de la liaison ou peut être prédéterminé.

9. Procédé selon la revendication 1,
**caractérisé par le fait qu'**on évalue les données affichées dans des parties d'écran (APW) au moyen d'un autre module de programme (VS).
